# EUROPEAN PATENT SPECIFICATION

(11) **EP 2 648 095 B1**
(45) Date of publication and mention of the grant of the patent: **09.09.2015**
(21) Application number: 13162322.5
(22) Date of filing: 04.04.2013
(51) Int. Cl.: G06F 9/44, G06F 11/14

(54) **System and method for controlling the booting of a computer**
System und Verfahren zur Steuerung des Boot-Prozesses eines Computers
Procédé et système de contrôle du démarrage d'un ordinateur

(30) Priority: 05.04.2012 JP 2012086306
(43) Date of publication of application: 09.10.2013
(73) Proprietor: Hitachi, Ltd., Tokyo 100-8280 (JP)
(72) Inventor: Uehata, Terumasa, Tokyo 100-8220 (JP)
(74) Representative: MERH-IP Matias Erny Reichl Hoffmann

(56) References cited:
- EP-A2- 2 112 589
- US-A1- 2007 136 447
- US-A1- 2010 031 257

## Description

### BACKGROUND

This invention relates to an improved method of controlling booting when processing is taken over from one computer to another in a computer system capable of booting at least two computers individually via a network.

Computer systems having a failure recovery function are widely employed. In this type of computer systems, servers constitute a redundant configuration so that, in the event of a malfunction or a failure in an active server which is in operation, processing is taken over by an auxiliary server which has been prepared as a spare. The failure recovery function requires setting the settings of the active server at the time of a failure automatically in the auxiliary server.

One way to take over network equipment, storage equipment, or the like is to use a host bus adapter (HBA).

HBAs are hardware for connecting a host system (computer) to other pieces of network equipment or storage equipment. Each HBA is given a unique World Wide Name (WWN). The HBA of the auxiliary server takes over the WWN of the active server, thereby taking over storage equipment that has been used by the active server (see, for example, Japanese Patent Application Laid-open No. 2010-033403).

Known technologies for booting a computer via a network include Wake On LAN (hereinafter abbreviated as WOL) in which a computer to be controlled is powered on by transmitting a magic packet to a network interface card (NIC) of the computer (e.g., International Patent WO 2008/117472 A).

US 2007/136447 A1 describes that respective WWNs (World Wide Names) which can be allocated to a plurality of computers, business application identity information of programs to be booted and area identity information, of areas in a storage system in which the programs are stored, are associated and stored.

EP 2 112 589 A2 describes that a system includes multiple SCSI nodes configured to perform a SCSI target function. Each of the multiple SCSI nodes includes a host bus adaptor configured to connect the SCSI node with a Fibre Channel fabric. The host bus adaptor being assigned a world wide name and a network address.

US 2010/031257 A1 describes a computer system, a virtual computer system and a computer activation management method for each system. In the virtual computer system, a virtualization mechanism includes a WWN management table for storing the correspondence between a virtual HBA assignable to each virtual computer and the WWN, and a LPAR activation unit for checking the WWN corresponding to the virtual HBA assigned to the virtual computer based on the WWN management table at the time of activating the virtual computer.

### SUMMARY

Network interface cards (NICs) that have an interface capable of rewriting an MAC address have come to be used in recent years.

In the case where the auxiliary server (auxiliary computer) takes over processing in the event of a failure of the active server (active computer), a network interface card can, as in the HBAs described above, enable the auxiliary server to use a network that has been used by the active server by allowing the auxiliary server to take over the MAC address of the active server.

In the case where a failure occurs in a running active server of a computer system that has a failure recovery function and the MAC address of the active server is taken over by an auxiliary server, the same MAC address is sometimes shared by the active server and the auxiliary server which takes over the MAC address of the active server after the auxiliary server takes over the business operation of the failed active server and the active server is shut down. This gives rise to a problem in that, when a user terminal or the like tries to boot a server by WOL in this state, the failed active server is booted unintendedly.

It is therefore an object of this invention to prevent a server that is not intended to boot from booting after one server is taken over by another. The object is solved by the invention according to the independent claims. Preferred developments are described by the dependent claims.

A representative aspect of the present disclosure is as follows. A computer, comprising: a processor; a memory; a communication device in which an identifier is set; and a configuration management module for managing hardware configurations, wherein the configuration management module is configured to: receive an identifier of the communication device; and compare the received identifier with the identifier set in the communication device and, when the received identifier fails to match the identifier set in the communication device, rewrite the identifier set in the communication device with the received identifier.

The exemplary embodiment of this invention can accordingly prevent a computer from booting at unintended timing when the MAC address of an active computer is taken over by an auxiliary server even though a magic packet for WOL is transmitted.

### BRIEF DESCRIPTION OF THE DRAWINGS

FIG. 1 is a block diagram illustrating an example of a computer system that performs failure recovery processing according to the embodiment of this invention.
FIG. 2 is a block diagram illustrating detailed configurations of the management module and the servers according to the embodiment of this invention.
FIG. 3 is a flow chart illustrating an example of failure recovery processing which is executed in the failure management module and BIOS request management module according to the embodiment of this invention.
FIG. 4A is a diagram illustrating an example of the MAC address management table that is saved in the MAC address management table storage area before a failure occurs according to the embodiment of this invention.
FIG. 4B is a diagram illustrating an example of the MAC address of the active server 1 before a failure occurs according to the embodiment of this invention.
FIG. 4C is a diagram illustrating an example of the MAC address of the auxiliary server 2 before a failure occurs according to the embodiment of this invention.
FIG. 5A is a diagram illustrating an example of a MAC address management table that is saved in the MAC address management table storage area after a failure occurs according to the embodiment of this invention.
FIG. 5B is a diagram illustrating an example of the MAC address of the server 1 after failure recovery processing according to the embodiment of this invention.
FIG. 5C is a diagram illustrating an example of the MAC address of the server 2 after the failure recovery processing according to the embodiment of this invention.
FIG. 6 is a sequence diagram for processing of setting an MAC address in the failed server 1 according to the embodiment of this invention.
FIG. 7 is a sequence diagram for processing of setting an MAC address in the server 2 which takes over the active server 1 according to the embodiment of this invention.
FIG. 8 is a flow chart illustrating an example of the MAC address setting processing which is executed in the servers according to the embodiment of this invention.

### DETAILED DESCRIPTION OF THE PREFERRED EMBODIMENT

An embodiment of this invention is described below with reference to the accompanying drawings.

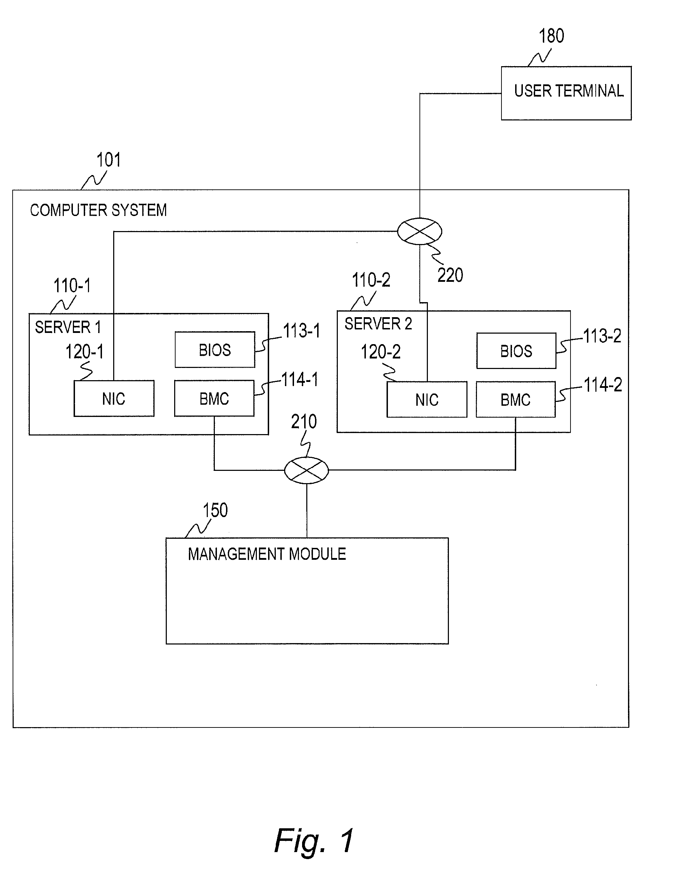

FIG. 1 is a block diagram illustrating an example of a computer system that performs failure recovery processing according to the embodiment of this invention. The computer system, which is denoted by 101, includes a server 1 (110-1), a server 2 (110-2), a management module 150, which controls these servers 1 and 2, a management network 210, which couples the management module 150 and the servers 1 and 2, and a business operation network 220, which couples the servers 1 and 2 and a user terminal 180.

The server 1 (110-1) and the server 2 (110-2) respectively have a network interface card (NIC) 120-1 and an NIC 120-2 which are capable of rewriting an MAC address and are compatible with Wake On LAN (WOL). The user terminal 180 can power on the server 1 (110-1) or the server 2 (110-2) by transmitting a magic packet via the business operation network 220.

In the following description, the servers are collectively denoted by a symbol 110, the active server is referred to as server 1, and the auxiliary server is referred to as server 2. The management module 150 monitors the servers 110 and executes failure recovery processing as described later.

The server 1 includes a basic I/O system (BIOS) 113-1 as firmware for controlling hardware, and a basement management controller (BMC) 114-1 for controlling and setting hardware via the BIOS 113-1 of the server 1 in response to an instruction from the management module 150. The server 2 similarly includes a BIOS 113-2 as firmware for controlling hardware and a BMC 114-2 for controlling and setting hardware via the BIOS 113-2 of the server 2 in response to an instruction from the management module 150.

In the following description, the NICs are collectively denoted by a symbol 120, the BIOSs are collectively denoted by a symbol 113, and the BMCs are collectively denoted by a symbol 114.

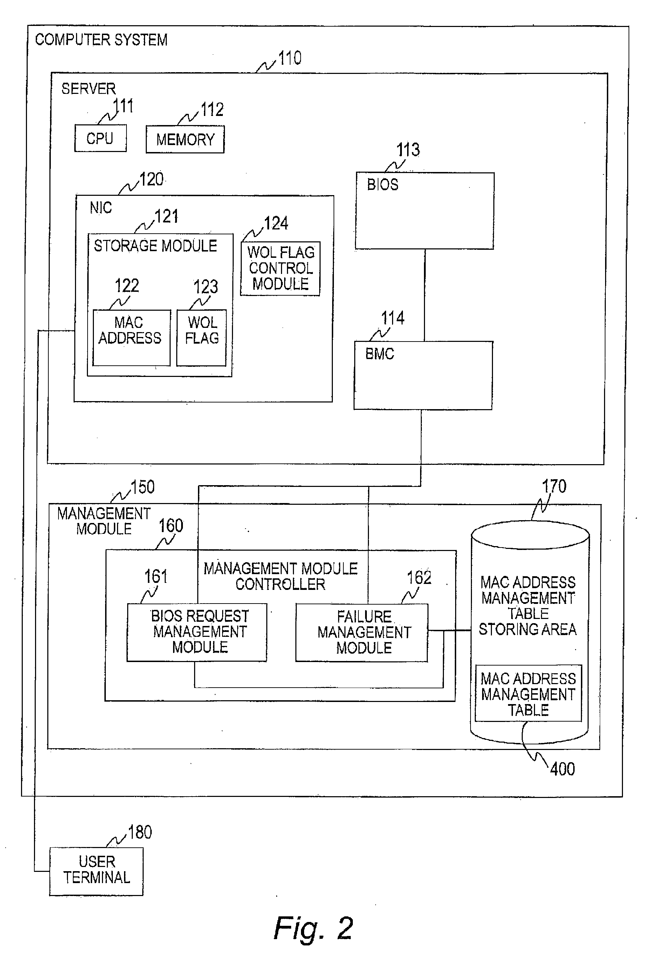

FIG. 2 is a block diagram illustrating detailed configurations of the management module 150 and the servers 110 according to the embodiment of this invention. The server 1 and the server 2, which have the same configuration, are illustrated as one server 110 in FIG. 2. The server 110 includes a CPU (processor) 111, a memory 112, the BIOS 113, the BMC 114, and the NIC 120.

The NIC 120 includes a storage module 121 and a WOL flag control module (boot control module) 124. The storage module 121 stores an MAC address 122 and a WOL flag (boot information) 123. The MAC addresses 122 of the respective NICs 120 are referred to as MAC address 122-1 for the NIC 120-1 and MAC address 122-2 for the NIC 120-2.

The management module 150 includes a management module controller 160 and an MAC address management table storage area 170. The management module controller 160 includes a BIOS request management module 161 which manages a change of the MAC address and a failure management module 162 which executes failure recovery processing. The MAC address management table storage area 170 stores an MAC address management table (identifier management information) 400.

The BIOS request management module 161 is capable of transferring data to the BIOS 113 via the BMC 114. The user terminal 180 and the NIC 120 are coupled to each other by the business operation network 220. The user terminal 180 is capable of transmitting a magic packet to the NIC 120. In the magic packet, the MAC address 122 assigned to the NIC 120 of the server 110 is repeated sixteen times.

When the MAC address 122 in the received magic packet and the MAC address 122-1 or 122-2 stored in the storage module 121 match, the WOL flag control module (boot control module) 124 of the NIC 120 sets a WOL flag (boot information) 123 to "1" (a given value), and transmits an instruction for powering the server 110 on to the BIOS 113.

The BIOS 113 receives the request to power on from the NIC 120 or the BMC 114 and powers the server 110 on. The BIOS 113 also cuts off the power of the server 110 when a request to power off is received from the BMC 114. The BIOS 113 functions as firmware (a configuration management module) for controlling the power of the server 110 and managing hardware configurations such as device settings. The BIOS 113 is executed by the CPU 111.

The management module controller 160 of the management module 150 includes a CPU (processor) and memory (not shown), and loads the BIOS request management module 161 and the failure management module 162 onto the memory so as to execute those function modules in the CPU.

The CPU of the management module controller 160 operates as programmed by programs of the respective function modules, thereby operating function modules that implement given functions. For instance, the CPU functions as the failure management module 162 when operating as programmed by a failure management program. The same applies with other programs, too. The CPU also operates as function modules that implement a plurality of processing procedures executed by the respective programs. The computers and the computer system are devices and system that include these function modules.

Programs, tables, and other types of information used to implement the functions of the management module controller 160 can be stored in a storage device such as a storage subsystem, a non-volatile semiconductor memory, a hard disk drive, or a solid state drive (SSD), or in a non-transitory computer-readable storage medium such as an IC card, an SD card, or a DVD. The MAC address management table storage area 170 can be set in the storage subsystem, non-volatile semiconductor memory, or hard disk drive given above.

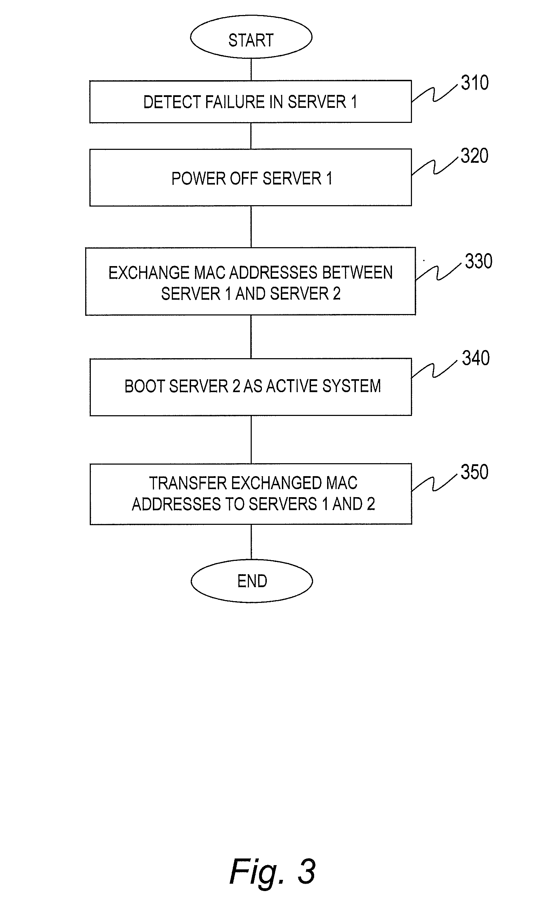

FIG. 3 is a flow chart illustrating an example of failure recovery processing which is executed in the failure management module 162 and BIOS request management module 161 of the management module controller 160.

The failure management module 162 of the management module controller 160 executes processing of powering off the server 1 and powering on the server 2 when a failure is detected in the server 1 so that processing of the server 1 is taken over by the server 2. This processing is executed when the failure management module 162 detects a failure in one of the servers 110. Publicly-known or well-known technologies can be applied to the detection of a failure in the servers 110, and details of the failure detection are not described herein.

After detecting a failure in the server 1 (Step 310), the failure management module 162 instructs the BMC 114-1 to power off the server 1 (Step 320). The BMC 114-1 receives the request to cut off power from the management module 150 and instructs the BIOS 113-1 to cut off power, thereby cutting off the power of the server 1.

The failure management module 162 exchanges the MAC addresses of the server 1 and the server 2 in the MAC address management table 400, which is saved in the MAC address management table storage area 170 (Step 330). The failure management module 162 transmits to the BMC 114-2 a request to power the server 2 on. When receiving the request to power on from the management module 150, the BMC 114-2 instructs the BIOS 113-2 to start supplying power, thereby powering on and booting the server 2 (Step 340).

Next, the BIOS request management module 161 transfers new MAC addresses 412 of the server 1 and server 2 from the MAC address management table 400, which is stored in the MAC address management table storage area 170, to the BMCs 114-1 and 114-2 of the respective servers (Step 350).

The BMC 114-2 of the server 2 transmits the new MAC address 412 to the BIOS 113-2 in response to a request from the BIOS 113-2, and the BIOS 113-2 sets the new MAC address 412 in the NIC 120-2 of the server 2.

In the processing described above, the new MAC address 412 obtained by the switching in Step 330, namely, the MAC address 122-1 of the NIC 120-1 of the server 1, is set in the NIC 120-2 of the server 2, thereby allowing the server 2 to take over processing of the server 1.
Meanwhile, the MAC address 122-1 of the server 1 whose power has been cut off is switched to the MAC address 122-2 of the server 2 in the MAC address management table 400. The MAC address 122-1 in the NIC 120-1, however, is not changed because the power of the server 1 has been cut off before the switching of the MAC addresses.

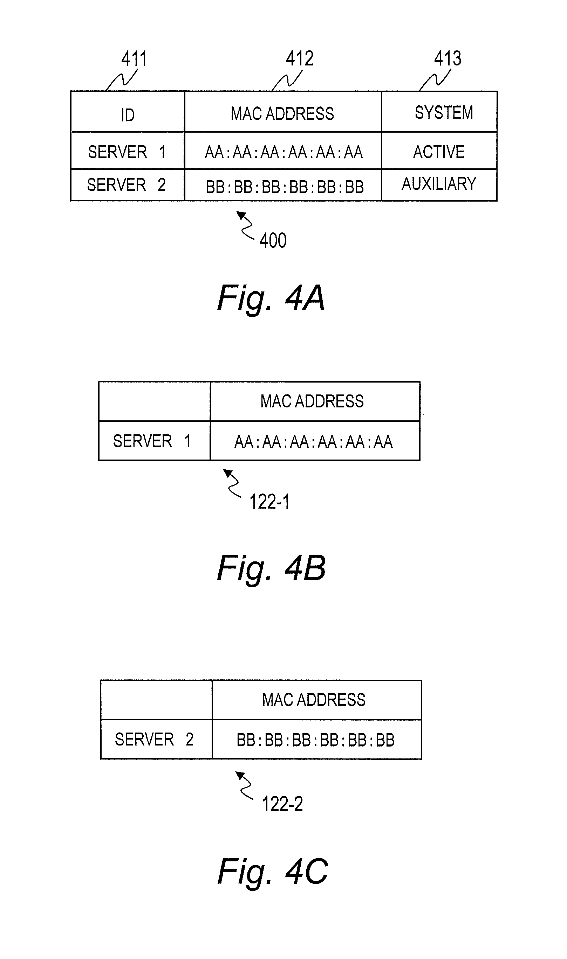

FIG. 4A is a diagram illustrating an example of the MAC address management table 400 that is saved in the MAC address management table storage area 170 before a failure occurs. FIG. 4B is a diagram illustrating an example of the MAC address of the active server 1 before a failure occurs. FIG. 4C is a diagram illustrating an example of the MAC address of the auxiliary server 2 before a failure occurs.

One entry of the MAC address management table 400 is constituted of a column for an ID 411 where the identifier of one of the servers 110 is stored, a column for the MAC address 412 that is assigned to the server 110, and a column for a system 413 where a value indicating whether the server 110 is an active server or an auxiliary (or standby) server is stored.

The MAC address 122-1 before a failure occurs that is saved in the storage module 121 of the NIC 120-1 of the server 1 (AA:AA:AA:AA:AA:AA) matches the address in the MAC address management table 400 as illustrated in FIG. 4B.

The MAC address 122-2 before a failure occurs that is saved in the storage module 121 of the NIC 120-2 of the server 2 (BB:BB:BB:BB:BB:BB) matches the address in the MAC address management table 400 as illustrated in FIG. 4C.

The description of this embodiment uses "AA:AA:AA:AA:AA:AA" and "BB:BB:BB:BB:BB:BB" as an example of the MAC address 122-1 of the server 1 and the MAC address 122-2 of the server 2, respectively. However, the specifics of the MAC addresses are not limited to this example.

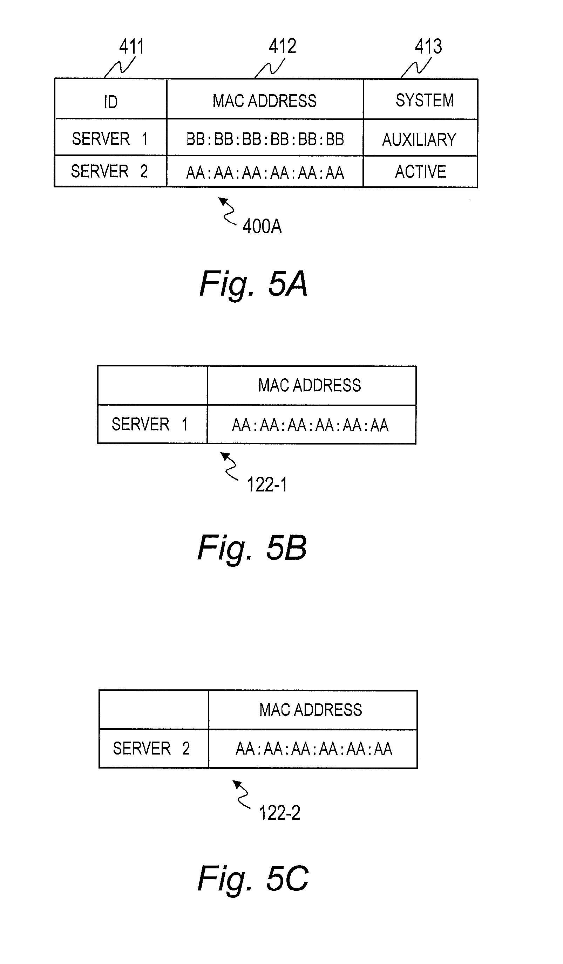

FIG. 5A is a diagram illustrating an example of a MAC address management table 400A that is saved in the MAC address management table storage area 170 after a failure occurs. FIG. 5B is a diagram illustrating an example of the MAC address of the server 1 after failure recovery processing. FIG. 5C is a diagram illustrating an example of the MAC address of the server 2 after the failure recovery processing.

The MAC address 122-2 after a failure occurs that is saved in the NIC 120-2 of the server 2, which has taken over processing of the active server, (AA:AA:AA:AA:AA:AA) matches the address in the MAC address management table 400A as illustrated in FIG. 5C. The failure management module 162 of the management module controller 160 exchanges the MAC address of the active system (AA:AA:AA:AA:AA:AA) and the MAC address of the auxiliary system (BB:BB:BB:BB:BB:BB) in the MAC address management table 400 in Step 330, which turns the MAC address management table 400 into the MAC address management table 400A of FIG. 5A.

Based on the MAC address management table 400A stored in the MAC address management table storage area 170, the BIOS request management module 161 transmits the new MAC address (BB:BB:BB:BB:BB:BB) to the BMC 114-1 of the server 1 and transmits the new MAC address (AA:AA:AA:AA:AA:AA) to the BMC 114-2 of the server 2 (Step 350).

The BMC 114-2 of the server 2 rewrites the MAC address 122-2 of the NIC 120-2 with the new MAC address (AA:AA:AA:AA:AA:AA) in conformity to the MAC address management table 400A.

The BMC 114-1 of the server 1, on the other hand, cannot rewrite the MAC address 122-1 (AA:AA:AA:AA:AA:AA) because the power has been cut off in Step 320. The MAC address 122-1 of the server 1 after the failure recovery processing (AA:AA:AA:AA:AA:AA) therefore does not match the address in the MAC address management table 400A as illustrated in FIG. 5B.

Consequently, the NIC 120-2 of the server 2 and the NIC 120-1 of the server 1 share the same MAC address 122 (AA:AA:AA:AA:AA:AA) as illustrated in FIGS. 5B and 5C.

When the user terminal 180 transmits a magic packet for booting the server 2 by WOL after the server 2, too, is shut down in the state of FIGS. 5B and 5C, the server 1 and the server 2 which share the same MAC address are both powered on.

Each server 110 is powered on when the MAC address 122 that is stored in the storage module 121 of the NIC 120 of the server 110 matches an MAC address that is transmitted to the server 110 in a magic packet. The failed server 1 is therefore temporarily powered on, but this invention prevents a plurality of servers 110 sharing the same MAC address from booting at unintended timing (for example, booting concurrently) by processing described later.

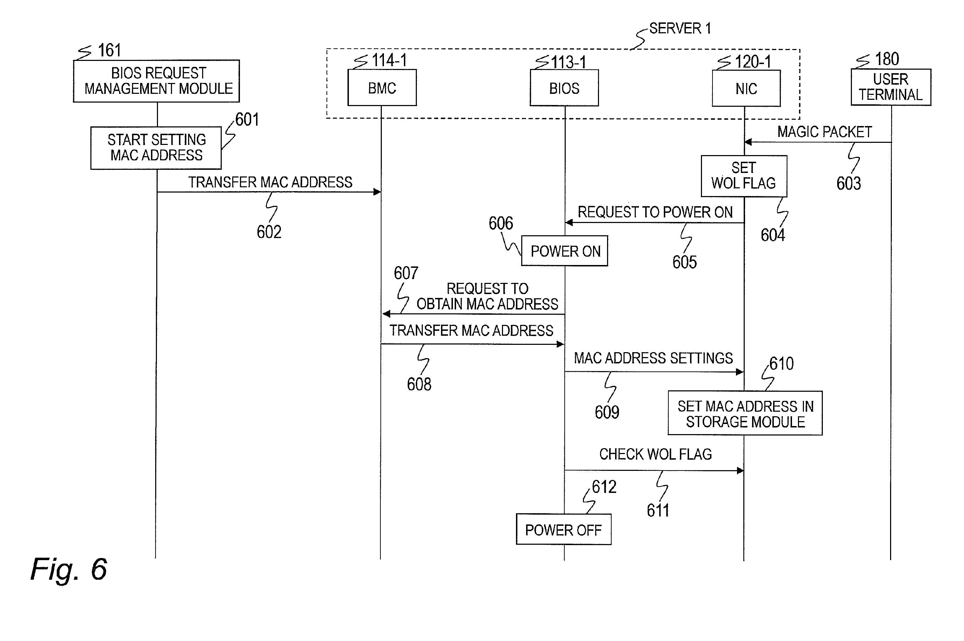

FIG. 6 is a sequence diagram for processing of setting an MAC address in the failed server 1. This sequence diagram illustrates an example of processing that is executed when WOL is conducted via the user terminal 180 after the failure recovery processing of FIG. 3.

First, the BIOS request management module 161 of the management module 150 starts the setting of an MAC address (601), and notifies the BMC 114-1 of the server 1 of the new MAC address of the active server 1 (602). This MAC address setting processing corresponds to the processing of Step 350 in FIG. 3. On the failed server 1 whose power has been cut off in the failure recovery processing of FIG. 3, the BMC 114-1 alone is running and the BIOS 113-1 is not activated. A magic packet 603 is transmitted from the user terminal 180 in this state (603).

The MAC address 122-1 of the server 1 and the MAC address 122-2 of the server 2 are the same MAC address (AA:AA:AA:AA:AA:AA) at the moment as described above. The WOL flag control module 124 of the NIC 120-1 sets the WOL flag 123 to "1" because an MAC address in the magic packet 603 matches its own MAC address 122-1 (604). The NIC 120-1 then requests the BIOS 113-1 of the server 1 to power on (605).

The BIOS 113-1 receives the request to power on from the NIC 120-1 and powers the server 1 on (606). The BIOS 113-1 next transmits a request to obtain an MAC address to the BMC 114-1 (607). The BMC 114-1 transfers the new MAC address (BB:BB:BB:BB:BB:BB) received from the management module 150 in the failure recovery processing of Step 602 to the BIOS 113-1 (608).

The BIOS 113-1 notifies the NIC 120-1 of the new MAC address (BB:BB:BB:BB:BB:BB) (609), and sets the new MAC address (BB:BB:BB:BB:BB:BB) as the MAC address 122-1 in the storage module 121 (610).

The BIOS 113-1 cuts off the power of the server 1 in the case where the WOL flag 123 of the NIC 120-1 has a value "1" (611 and 612).

Through the processing described above, the server 1 which has been shut down in the failure recovery processing is powered on by WOL because the MAC address 122-1 is shared by the server 1 and the auxiliary server 2 at the moment. When the server 1 is powered on, the BIOS 113-1 requests a new MAC address from the BMC 114-1, thereby updating the MAC address 122-1 of the NIC 120-1. The BIOS 113-1 can then shut down the failed server 1.

Accordingly, despite WOL powering on the server 110 which has been shut down due to a failure occurrence, an update to a new MAC address resolves the situation where servers share the same MAC address, and thus prevents a plurality of servers 110 sharing an MAC address from booting unintendedly.

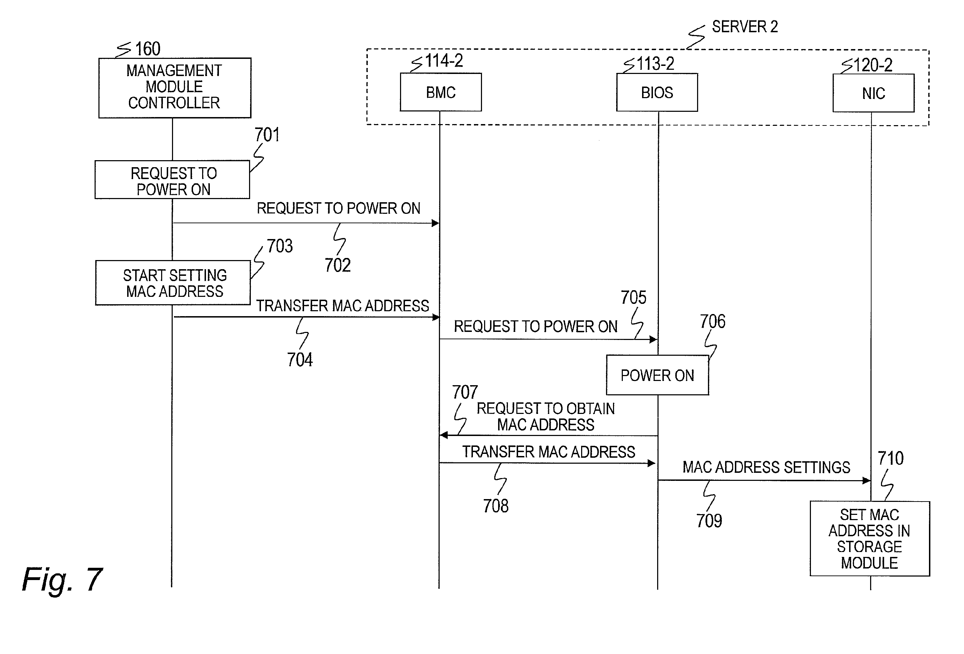

FIG. 7 is a sequence diagram for processing of setting an MAC address in the server 2 which takes over the active server 1. This sequence diagram illustrates processing that is executed after the failure recovery processing of FIG. 3.

First, the failure management module 162 of the management module controller 160 transmits a request to power on the server 2 which takes over the failed server 1 (701 and 702). This processing corresponds to the processing of Step 340 in FIG. 3. Next, the BIOS request management module 161 of the management module controller 160 starts the setting of an MAC address (703), and notifies the BMC 114-2 of the new MAC address of the auxiliary server 2 (AA:AA:AA:AA:AA:AA) (704). This MAC address setting processing corresponds to the processing of Step 350 in FIG. 3.

The BIOS 113-2 of the server 2 receives the request to power on from the BMC 114-2 and powers on and boots the server 2 (705 and 706).

The BIOS 113-2 next transmits a request to obtain an MAC address to the BMC 114-2 (707). The BMC 114-2 transfers the new MAC address (AA:AA:AA:AA:AA:AA) received from the management module 150 in the failure recovery processing of Step 704 to the BIOS 113-1 (708).

The BIOS 113-2 notifies the NIC 120-2 of the new MAC address (AA:AA:AA:AA:AA:AA) (709), and sets the new MAC address (AA:AA:AA:AA:AA:AA) as the MAC address 122-2 in the storage module 121 (710).

Through the processing described above, the auxiliary server 2 booted after the failed server 1 is shut down can update the MAC address 122-2 of the NIC 120-2 with the new MAC address received from the management module 150 (AA:AA:AA:AA:AA:AA), and take over processing of the active server 1.

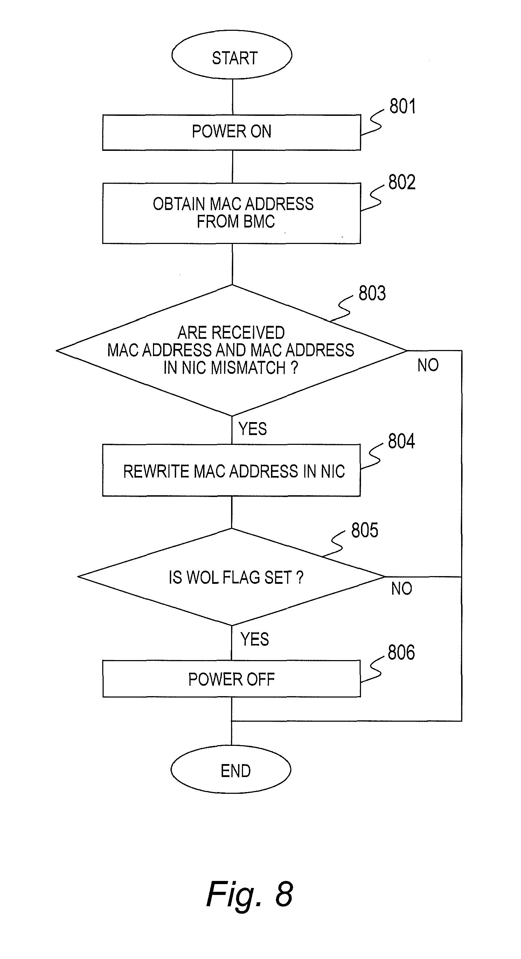

FIG. 8 is a flow chart illustrating an example of the MAC address setting processing which is executed in the servers. This processing is executed in each server 110 when the server 110 is booted.

First, the BIOS 113 of the server 110 powers on and boots the server 110 in response to a request to power on which is received from the BMC 114, a magic packet transmitted to the NIC 120, or the like (801). In the case where the server 110 is booted by WOL, the WOL flag control module 124 sets the WOL flag 123 to "1".

The BIOS 113 next transmits a request to obtain an MAC address to the BMC 114 and, when there is a new MAC address, the BMC 114 transfers the new MAC address to the BIOS 113. The BIOS 113 obtains the new MAC address from the BMC 114 (802).

Next, the BIOS 113 determines whether or not the MAC address obtained from the BMC 114 matches the MAC address 122 set in the NIC 120 (803). In the case where the MAC address obtained from the BMC 114 and the MAC address 122 set in the NIC 120 match, the BIOS 113 determines that the server 110 has been booted normally and ends the processing.

In the case where MAC address obtained from the BMC 114 and the MAC address 122 set in the NIC 120 do not match, on the other hand, the BIOS 113 proceeds to Step 804. The mismatch between the two MAC addresses indicates that the BMC 114 has not rewritten the MAC address 122 set in the NIC 120 with the new MAC address transmitted from the BIOS request management module 161 to its own server because the server has been powered off in Step 320. In short, the mismatch indicates that the own server (the server 1) and another server (the server 2) share an MAC address.

The BIOS 113 sets the MAC address obtained from the BMC 114 as the MAC address 122 in the NIC 120, thereby updating the MAC address 122 of the NIC itself (804).

The BIOS 113 next determines whether or not the WOL flag 123 of the storage module 121 in the NIC 120 is set (805). The BIOS 113 ends the processing when the WOL flag 123 is found to have been cleared, and powers the server 110 off when the WOL flag 123 is found to be set (806).

As described above, in the case where the NIC 120-1 of the server 1 and the NIC 120-2 of the server 2 have a matching MAC address as illustrated in FIGS. 5A to 5C, the computer system to which this invention is applied can prevent the failed server from entering a running state even when the server 1 and the server 2 are both booted by WOL, and can update the MAC addresses of the servers 1 and 2 to new MAC addresses.

The embodiment described above deals with an example in which the BMC 114 handles power control and monitoring of the server 110 and the transferring of an MAC address. A server control module for controlling and monitoring hardware of a server, such as a service processor (SVP) (not shown), may be used instead.

In the example of the embodiment described above, a BIOS is used as firmware (configuration management module) for controlling the power of each server 110 and managing hardware configurations such as device settings. A Unified Extensible Firmware Interface (UEFI) may be used instead.

While the embodiment described above deals with an example in which the management module 150 performs failure recovery processing on the plurality of servers 110, the failure recovery processing may be conducted by a management computer (not shown).

The embodiment described above deals with an example in which the NICs 120 are used as communication devices and MAC addresses are used as the identifiers of the communication devices. However, this invention is applicable to any communication device that is capable of rewriting an identifier. For instance, a host bus adapter (HBA) may be employed as a communication device and a World Wide Name (WWN) may be employed as the identifier of the HBA.

In the example of the embodiment described above, the occurrence of a failure serves as a trigger for the taking over of processing of the server 1 by the server 2. However, the trigger is not limited to whether a failure has occurred or not, and taking over between servers may be executed under a given condition such as the issuance of an instruction from an administrator or a user.

Embodiments of this invention have now been described. However, this invention is not limited to the embodiments described above, and it would be easy for those skilled in the art to modify, add, or convert elements of the embodiments described above within the scope of this invention. For instance, a system or an apparatus to which this invention is applied can have only a part of the configurations of the plurality of embodiments described above, or can include all components of the plurality of embodiments described above. This invention allows for substituting some elements of the configuration of one embodiment with elements of another embodiment, and allows for adding a part of the configuration of one embodiment to another embodiment.

The configurations, functions, processing modules, processing units, and the like described above may partially or entirely be implemented by hardware by, for example, designing in the form of an integrated circuit. Information such as programs, tables, and files for implementing the respective functions can be stored in a storage device such as a non-volatile semiconductor memory, a hard disk drive, or a solid state drive, or in a computer-readable, non-transitory data storage medium such as an IC card, an SD card, or a DVD.

## Claims

1. A computer, comprising:
a processor (111);
a memory (112);
a communication device (120) in which an identifier is set; and
a configuration management module (113) for managing hardware configurations,
wherein the configuration management module (113) is configured to:
receive an identifier of the communication device (120); and **characterized by**
compare the received identifier with the identifier set in the communication device (120) and, when the received identifier fails to match the identifier set in the communication device (120), rewrite the identifier set in the communication device (120) with the received identifier, wherein
the communication device (120) comprises:
a boot control module (124) which requests the configuration management module (113) to boot the computer when given information is received; and
boot information (123) to which a given value is set by the boot control module (124) when the booting of the computer is requested, and
wherein, in a case where the received identifier fails to match the identifier set in the communication device (120), the configuration management module (113) determines whether or not a value of the boot information (123) is the given value and cuts off power of the computer when the value of the boot information (123) is the given value.

2. The computer according to claim 1, wherein the communication device (120) comprises a network interface.

3. The computer according to at least one of claims 1 to 2, wherein the identifier comprises an MAC address (122).

4. The computer according to at least one of claims 1 to 3,
wherein the communication device (120) comprises:
a boot control module (124) which requests the configuration management module (113) to boot the computer when given information is received; and
boot information (123) to which a given value is set by the boot control module (124) when the booting of the computer is requested, and
wherein, in a case where the received identifier fails to match the identifier set in the communication device (120), the configuration management module (113) determines whether or not a value of the boot information (123) is the given value and powers the computer on when the value of the boot information (123) fails to be the given value.

5. The computer according to at least one of claims 1 to 4, wherein the communication device (120) comprises a host bus adapter.

6. A method of controlling a computer,
the computer comprising:
a processor (111);
a memory (112);
a communication device (120) in which an identifier is set; and
a configuration management module (113) for managing hardware configurations,
the method comprising:
a first step of receiving, by the configuration management module (113), an identifier of the communication device (120);
**characterized by**
a second step of comparing, by the configuration management module (113), the received identifier with the identifier set in the communication device (120); and
a third step of setting, by the configuration management module (113), the received identifier as the identifier of the communication device (120) when the received identifier fails to match the identifier set in the communication device (120), wherein the communication device (120) comprises:
a boot control module (124) which requests the configuration management module (113) to boot the computer when given information is received; and
boot information (123) to which a given value is set by the boot control module when the booting of the computer is requested, and
wherein the method further comprises:
a fourth step of determining, by the configuration management module (113), in a case where the received identifier fails to match the identifier set in the communication device (120), whether or not a value of the boot information is the given value; and
a fifth step of cutting off, by the configuration management module (113), power of the computer when the value of the boot information is the given value.

7. The method of controlling a computer according to claim 6, wherein the communication device (120) comprises a network interface.

8. The method of controlling a computer according to at least one of claims 6 to 7, wherein the identifier comprises an MAC address (122).

9. The method of controlling a computer according to at least one of claims 6 to 8, wherein the communication device comprises:
a boot control module (124) which requests the configuration management module (113) to boot the computer when given information is received; and
boot information (123) to which a given value is set by the boot control module (124) when the booting of the computer is requested, and
wherein the method further comprises:
a fourth step of determining, by the configuration management module (113), in a case where the received identifier fails to match the identifier set in the communication device (120), whether or not a value of the boot information (123) is the given value; and
a sixth step of powering on, by the configuration management module (113), the computer when the value of the boot information (123) fails to be the given value.

10. The method of controlling a computer according to at least one of claims 6 to 9, wherein the communication device (120) comprises a host bus adapter.

## Patentansprüche

1. Computer, der Folgendes umfasst:
einen Prozessor (111);
einen Speicher (112);
eine Kommunikationsvorrichtung (120), in der ein Identifizierungsmerkmal eingestellt ist; und
ein Konfigurationsmanagementmodul (113) zum Managen von Hardwarekonfigurationen,
wobei das Konfigurationsmanagementmodul (113) konfiguriert ist:
ein Identifizierungsmerkmal der Kommunikationsvorrichtung (120) zu empfangen; und **gekennzeichnet durch**
Vergleichen des empfangenen Identifizierungsmerkmal mit dem in der Kommunikationsvorrichtung (120) eingestellten Identifizierungsmerkmal und dann, wenn das empfangene Identifizierungsmerkmal nicht mit dem in der Kommunikationsvorrichtung (120) eingestellten Identifizierungsmerkmal übereinstimmt, erneutes Schreiben des in der Kommunikationsvorrichtung (120) eingestellten Identifizierungsmerkmals mit dem empfangenen Identifizierungsmerkmal, wobei
die Kommunikationsvorrichtung (120) Folgendes umfasst:
ein Startsteuermodul (124), das das Konfigurationsmanagementmodul (113) auffordert, den Computer zu starten, wenn die vorgegebenen Informationen empfangen worden sind; und
Startinformationen (123) auf die ein vorgegebener Wert durch das Startsteuermodul (124) eingestellt wird, wenn das Starten des Computers angefordert wird, und
wobei in einem Fall, in dem das Identifizierungsmerkmal nicht mit dem in der Kommunikationsvorrichtung (120) eingestellten Identifizierungsmerkmal übereinstimmt, das Konfigurationsmanagementmodul (113) bestimmt, ob ein Wert der Startinformationen (123) dem vorgegebenen Wert entspricht oder nicht und die Stromversorgung des Computers unterbricht, wenn der Wert der Startinformationen (123) der vorgegebene Wert ist.

2. Computer nach Anspruch 1, wobei die Kommunikationsvorrichtung (120) eine Netzschnittstelle umfasst.

3. Computer nach mindestens einem der Ansprüche 1 bis 2, wobei das Identifizierungsmerkmal eine MAC-Adresse (122) umfasst.

4. Computer nach mindestens einem der Ansprüche 1 bis 3,
wobei die Kommunikationsvorrichtung (120) Folgendes umfasst:
ein Startsteuermodul (124), das das Konfigurationsmanagementmodul (113) auffordert, den Computer zu starten, wenn die vorgegebenen Informationen empfangen worden sind; und
Startinformationen (123), auf die ein vorgegebener Wert durch das Startsteuermodul (124) eingestellt wird, wenn das Starten des Computers angefordert wird, und
wobei in einem Fall, in dem das Identifizierungsmerkmal nicht mit dem in der Kommunikationsvorrichtung (120) eingestellten Identifizierungsmerkmal übereinstimmt, das Konfigurationsmanagementmodul (113) bestimmt, ob ein Wert der Startinformationen (123) der vorgegebene Wert ist oder nicht und die Stromversorgung des Computers herstellt, wenn der Wert der Startinformationen (123) nicht der vorgegebene Wert ist.

5. Computer nach mindestens einem der Ansprüche 1 bis 4, wobei die Kommunikationsvorrichtung (120) einen Host-Bus-Adapter umfasst.

6. Verfahren zum Steuern eines Computers, wobei der Computer Folgendes umfasst:
einen Prozessor (111);
einen Speicher (112);
eine Kommunikationsvorrichtung (120), in der ein Identifizierungsmerkmal eingestellt ist; und
ein Konfigurationsmanagementmodul (113) zum Managen von Hardwarekonfigurationen, und
das Verfahren Folgendes umfasst:
einen ersten Schritt des Empfangens eines Identifizierungsmerkmals der Kommunikationsvorrichtung (120) durch das Konfigurationsmanagementmodul (113);
**gekennzeichnet durch**
einen zweiten Schritt des Vergleichens des empfangenen Identifizierungsmerkmals mit dem Identifizierungsmerkmal, das in der Kommunikationsvorrichtung (120) eingestellt ist, **durch** das Konfigurationsmanagementmodul (113); und
einen dritten Schritt des Einstellens des empfangenen Identifizierungsmerkmals als das Identifizierungsmerkmal der Kommunikationsvorrichtung (120) **durch** das Konfigurationsmanagementmodul (113), wenn das empfangene Identifizierungsmerkmal nicht mit dem Identifizierungsmerkmal übereinstimmt, das in der Kommunikationsvorrichtung (120) eingestellt ist, wobei die Kommunikationsvorrichtung (120) Folgendes umfasst:
ein Startsteuermodul (124), das das Konfigurationsmanagementmodul (113) auffordert, den Computer zu starten, wenn die vorgegebenen Informationen empfangen worden sind; und
Startinformationen (123), auf die ein vorgegebener Wert von dem Startsteuermodul (124) eingestellt wird, wenn das Starten des Computers angefordert wird, und
wobei das Verfahren ferner Folgendes umfasst:
einen vierten Schritt des Bestimmens **durch** das Konfigurationsmanagementmodul (113), ob ein Wert der Startinformationen der vorgegebene Wert ist oder nicht, in einem Fall, in dem das empfangene Identifizierungsmerkmal nicht mit dem Identifizierungsmerkmal übereinstimmt, das in der Kommunikationsvorrichtung (120) eingestellt ist; und
einen fünften Schritt des Unterbrechens der Stromversorgung des Computers **durch** das Konfigurationsmanagementmodul (113), wenn der Wert der Startinformationen dem vorgegebenen Wert entspricht.

7. Verfahren zum Steuern eines Computers nach Anspruch 6, wobei die Kommunikationsvorrichtung (120) eine Netzschnittstelle umfasst.

8. Verfahren zum Steuern eines Computers nach mindestens einem der Ansprüche 6 bis 7, wobei das Identifizierungsmerkmal eine MAC-Adresse (122) umfasst.

9. Verfahren zum Steuern eines Computers nach mindestens einem der Ansprüche 6 bis 8, wobei die Kommunikationsvorrichtung Folgendes umfasst:
ein Startsteuermodul (124), das das Konfigurationsmanagementmodul (113) auffordert, den Computer zu starten, wenn die vorgegebenen Informationen empfangen worden sind; und
Startinformationen (123), auf die ein vorgegebener Wert von dem Startsteuermodul (124) eingestellt wird, wenn das Starten des Computers angefordert wird, und
wobei das Verfahren ferner Folgendes umfasst:
einen vierten Schritt des Bestimmens, ob ein Wert der Startinformationen der vorgegebene Wert ist oder nicht durch das Konfigurationsmanagementmodul (113), in einem Fall, in dem das empfangene Identifizierungsmerkmal nicht mit dem Identifizierungsmerkmal übereinstimmt, das in der Kommunikationsvorrichtung (120) eingestellt ist; und
einen sechsten Schritt des Herstellens der Stromversorgung eines Computers durch das Konfigurationsmanagementmodul (113), wenn der Wert der Startinformationen (123) nicht der vorgegebene Wert ist.

10. Verfahren zum Steuern eines Computers nach mindestens einem der Ansprüche 6 bis 9, wobei die Kommunikationsvorrichtung einen Host-Bus-Adapter umfasst.

## Revendications

1. Ordinateur, comprenant :
un processeur (111) ;
une mémoire (112) ;
un dispositif de communication (120) dans lequel est fixé un identificateur ; et
un module de gestion de configuration (113) pour gérer des configurations matérielles,
dans lequel le module de gestion de configuration (113) est configuré pour :
recevoir un identificateur du dispositif de communication (120) ; et **caractérisé par**
une comparaison de l'identificateur reçu avec l'identificateur fixé dans le dispositif de communication (120) et, si l'identificateur reçu n'est pas en accord avec l'identificateur fixé dans le dispositif de communication (120), une réécriture de l'identificateur fixé dans le dispositif de communication (120) avec l'identificateur reçu, dans lequel le dispositif de communication (120) comprend :
un module de commande de démarrage ("boot") (124) qui requiert le module de gestion de configuration (113) pour démarrer l'ordinateur lorsque l'information donnée est reçue ; et
une information de démarrage (123) dans laquelle une valeur donnée est fixée par le module de commande de démarrage (124) quand le démarrage de l'ordinateur est requis, et
dans lequel, dans le cas où l'identificateur reçu ne s'accorde pas avec l'identificateur fixé dans le dispositif de communication (120), le module de gestion de configuration (113) détermine si une valeur de l'information de démarrage (123) est ou non la valeur donnée et coupe l'alimentation de puissance de l'ordinateur quand la valeur de l'information démarrage (123) est la valeur donnée.

2. Ordinateur selon la revendication 1, dans lequel le dispositif de communication (120) comprend une interface de réseau.

3. Ordinateur selon l'une au moins des revendications 1 et 2, dans lequel l'identificateur comprend une adresse MAC (122).

4. Ordinateur selon l'une au moins des revendications 1 à 3,
dans lequel le dispositif de communication (120) comprend :
un module de commande de démarrage (124) qui requiert le module de gestion de configuration (113) pour démarrer l'ordinateur lorsque l'information donnée est reçue ; et
une information de démarrage (123) à laquelle une valeur donnée est fixée par le module de commande de démarrage (124) quand le démarrage de l'ordinateur est requis, et
dans lequel, dans un cas où l'identificateur reçu n'est pas accordé avec identificateur fixé dans le dispositif de communication (120), le module de gestion de configuration (113) détermine si une valeur de l'information de démarrage (123) est ou non la valeur donnée et
alimente l'ordinateur en puissance quand la valeur de l'information de démarrage (123) n'est pas la valeur donnée.

5. Ordinateur selon l'une au moins des revendications 1 à 4, dans lequel le dispositif de communication (120) comprend un adaptateur de bus hôte.

6. Procédé pour commander un ordinateur,
l'ordinateur comprenant :
un processeur (111) ;
une mémoire (112) ;
un dispositif de communication (120) dans lequel est fixé un identificateur ; et
un module de gestion de configuration (113) pour gérer des configurations matérielles,
le procédé comprenant :
une première étape consistant à recevoir, par le module de gestion de configuration (113), un identificateur du dispositif de communication (120) ;
**caractérisé par**
une seconde étape consistant à comparer, par le module de gestion de configuration (113), l'identificateur reçu avec l'identificateur fixé dans le dispositif de communication (120) ; et
une troisième étape consistant à fixer, par le module de gestion de configuration (113), l'identificateur reçu comme étant l'identificateur du dispositif de communication (120) quand l'identificateur reçu n'est pas en accord avec l'identificateur fixé dans le dispositif de communication (120),
dans lequel le dispositif de communication (120) comprend :
un module de commande de démarrage ("boot") (124) qui requiert le module de gestion de configuration (113) pour démarrer l'ordinateur quand l'information donnée est reçue ; et
une information de démarrage (123) à laquelle une valeur donnée est fixée par le module de commande de démarrage quand le démarrage de l'ordinateur est requis, et
dans lequel le procédé comprend en outre :
une quatrième étape consistant à déterminer, par le module de gestion de configuration (113), dans un cas où l'identificateur reçu n'est pas en accord avec l'identificateur fixé dans le dispositif de communication (120) si une valeur de l'information de démarrage est ou non la valeur donnée ; et
une cinquième étape consistant à couper, par le module de gestion de configuration (113), l'alimentation de puissance de l'ordinateur quand la valeur de l'information de démarrage est la valeur donnée.

7. Procédé pour commander un ordinateur selon la revendication 6, dans lequel le dispositif de communication (120) comprend une interface de réseau.

8. Procédé pour commander un ordinateur selon l'une au moins des revendications 6 et 7, dans lequel l'identificateur comprend une adresse MAC (122).

9. Procédé pour commander un ordinateur selon l'une au moins des revendications 6 à 8, dans lequel le dispositif de communication comprend :
un module de commande de démarrage (124) qui requiert le module de gestion de configuration (113) pour démarrer l'ordinateur quand l'information donnée est reçue ; et
une information de démarrage (123) à laquelle une valeur donnée est fixée par le module de commande de démarrage (124) quand le démarrage de l'ordinateur est requis, et
dans lequel le procédé comprend en outre :
une quatrième étape consistant à déterminer, par le module de gestion de configuration (113), dans un cas où l'identificateur reçu n'est pas en accord avec identificateur fixé dans le dispositif de communication (120), si une valeur de l'information de démarrage (123) est ou non la valeur donnée ; et
une sixième étape consistant à alimenter en puissance, par le module de gestion de configuration (113), l'ordinateur quand la valeur de l'information de démarrage (123) n'est pas la valeur donnée.

10. Procédé pour commander un ordinateur selon l'une au moins des revendications 6 à 9, dans lequel le dispositif de communication (120) comprend un adaptateur de bus hôte.
